# EUROPEAN PATENT APPLICATION

(11) **EP 0 644 074 A1**
(43) Date of publication of application: **22.03.1995**
(21) Application number: 94202588.3
(22) Date of filing: 08.09.1994
(51) Int. Cl.: B60J 5/06, E05D 15/10

(54) **Mechanical drive for sliding door**

(30) Priority: 13.09.1993 NL 9301579
(71) Applicant: Dinkla, Jan, NL-2983 HR Ridderkerk (Z.-H.) (NL); Dinkla, Renée, NL-3341 BK Hendrik-Ido-Ambacht (NL)
(72) Inventor: Dinkla, Jan, NL-2983 HR Ridderkerk (NL)
(74) Representative: Eveleens Maarse, Pieter

(57) **Abstract**

The invention relates to a device for driving a door arranged in a vehicle, movable substantially parallel to a wall of the vehicle and adapted to close an opening arranged in a vehicle wall, which device comprises a flexible belt, two ends of which are connected to the door, and a drive device connected to the vehicle which is adapted to exert tractive forces on the belt by means of engaging means.

Such a door is particularly suitable for delivery vans in order to prevent deliverymen leaving open the door of their vehicle when delivering orders.

The device is also particularly suitable for doors which, in addition to performing a movement parallel to a wall, also perform a movement substantially perpendicularly of this wall.

## Description

The present invention relates to a device for driving a door arranged in a vehicle, movable substantially parallel to a wall of the vehicle and adapted to close an opening arranged in a vehicle wall, which device comprises a flexible belt, two ends of which are connected to the door, and a drive device connected to the vehicle which is adapted to exert tractive forces on the belt by means of engaging means.

Such a device is not known up to the present time.

Up until now such doors have therefore been opened and closed manually.

There nevertheless exists a need for a mechanical drive device for such a door. This need is particularly felt by delivery and courier companies, wherein deliverymen or couriers in their haste often leave the door of their vehicle open when delivering the packages. This means that for the length of time necessary for delivering a package the door remains open, with a considerable danger of theft. This is of particular importance because the packages for delivering are often of a high value, or the documents are confidential.

This problem likewise occurs in the collection of packages or documents.

Opening and closing such a sliding door is moreover a difficult operation, wherein relatively great force is needed which, when not exerted with the necessary care, which is often the case when haste is required, can result in back complaints.

It will be apparent that there is therefore a need for such a drive device.

The invention meets the needs of such a drive device in that it is provided with a flexible belt, two ends of which are connected to the door, and a drive device connected to the vehicle which is adapted to exert tractive forces on the belt by means of engaging means. The use of a belt makes it possible to compensate any movements perpendicularly of the main direction of movement of the door, so that when the door becomes worn, the danger of gear wheels and gear racks or similar drive elements becoming disengaged is prevented.

The application of a flexible belt moreover enables use of such a drive device in an existing vehicle. Few structural adjustments then have to be carried out on the vehicle itself.

It will be apparent that it is desirable that, when the door is provided with a lock, the lock must be released before the door can be opened. The invention provides herefore in that at least one end of the belt is adapted to engage onto an auxiliary body which is resiliently connected to the door and which is connected with a transmission mechanism to a lock fixed to the door. By means of the drive member this device thus offers the possibility not only of opening the door but also of releasing the lock. This lock can be adapted both to lock the door in the closed position and in the opened position.

Vehicles exist however wherein the door not only performs a movement parallel to the wall but, particularly in the vicinity of the opening, also performs a movement perpendicularly of the wall in order to move the door into the doorway. The invention likewise provides for the driving of such a door by providing guide means for guiding the flexible belt, which guide means are movable transversely of the wall direction.

These guide means for the movement in the transverse direction are preferably drivable by the drive means.

In order to be able to drive the device with only a single drive member, such as an electric motor, the drive means comprise a differential, the input shaft of which is driven by an electric motor, a first output shaft drives the transverse movement of the drive means, and a second output shaft drives the rotating engaging means.

It will be apparent that these steps limit the number of drive elements (prime movers) to one, which results in savings of cost, volume and weight.

Other attractive embodiments can be found in the remaining sub-claims.

The present invention will now be elucidated with reference to the annexed drawings, in which:
fig. 1 shows a partly broken away perspective view of a device according to the invention;
fig. 2 shows a vertical sectional view according to the line II-II in fig. 1;
fig. 3 is a broken away detail view of the device according to the invention;
fig. 4 shows a top view, in partly sectional view, of the detail depicted in fig. 3;
fig. 5 is a sectional view along the line 101 in fig. 4;
fig. 6 shows a top view of the detail shown in fig. 4 in another position of the arm;
fig.7 is a detail view of the locking mechanism which forms part of the present invention;
fig. 8 is a perspective detail view of the device;
fig. 9 shows a sectional view along the line 101 in fig. 8; and
fig. 10, 11 and 12 show sectional views corresponding with fig. 9 during various stages of the belt being pressed into the profile.

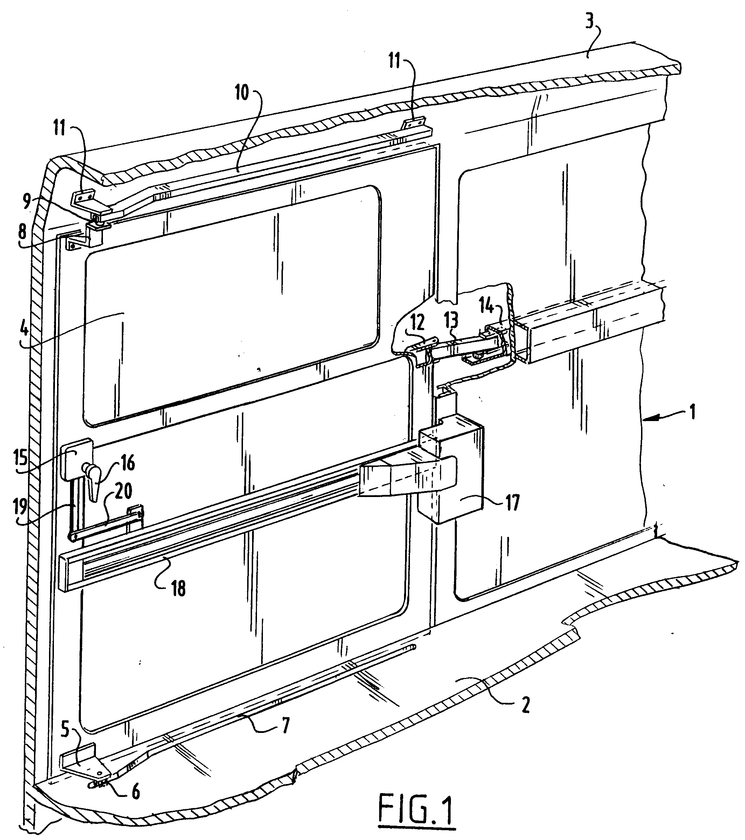

The inside of a vehicle wall 1 is shown in fig. 1, wherein the vehicle wall 1 extends between the vehicle floor 2 and the vehicle roof 3. In the vehicle wall 1 is arranged an opening which is closable by a movable door 4. The movable door is a sliding door, wherein on the underside of the door is arranged an ear 5 on which is fixed a roller 6 which is guidable in a guide groove 7 arranged in the floor 2. At the top the door is provided with an ear 8 on which a roller 9 is arranged which is slidable in a guide rail 10 which is fixed to the top of the vehicle wall 1 by means of brackets 11. Both ears 5, 8 are arranged on the closing side of the door.

On the other side the door is provided with a bracket 12 which is pivotally connected to a lever 13 which is guided in a guide rail 14 arranged on the outside of the vehicle. The lever 13 ensures that when the door is opened the side of the bracket 12 initially moves outward so that the door is lifted out of the track at least on this side, whereafter lever 13 assumes a position substantially perpendicular to the direction of movement, and can be moved together with the door to the fully opened position of the door.

When the door is closed the lever 13 operates in reverse manner; it remains blocked in the position extending perpendicular to the direction of movement until the extreme position has been reached, whereafter lever 13 can rotate and the door is moved to its closed position.

The door is further closable by means of a lock mechanism 15, which is provided with an interior crank 16. The door construction described thus far is generally known.

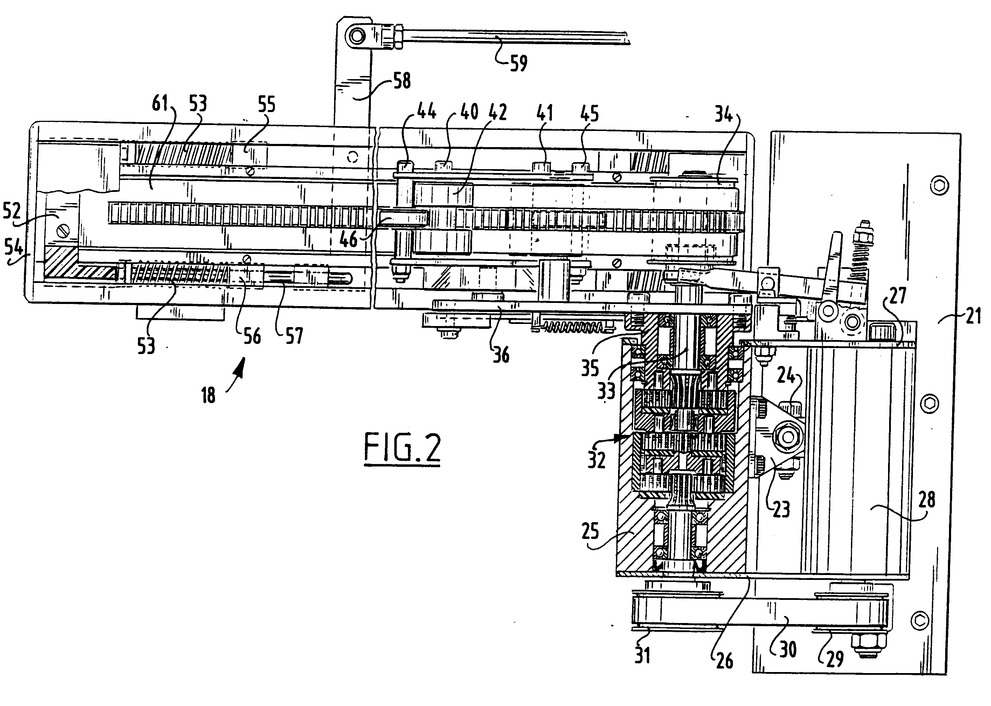

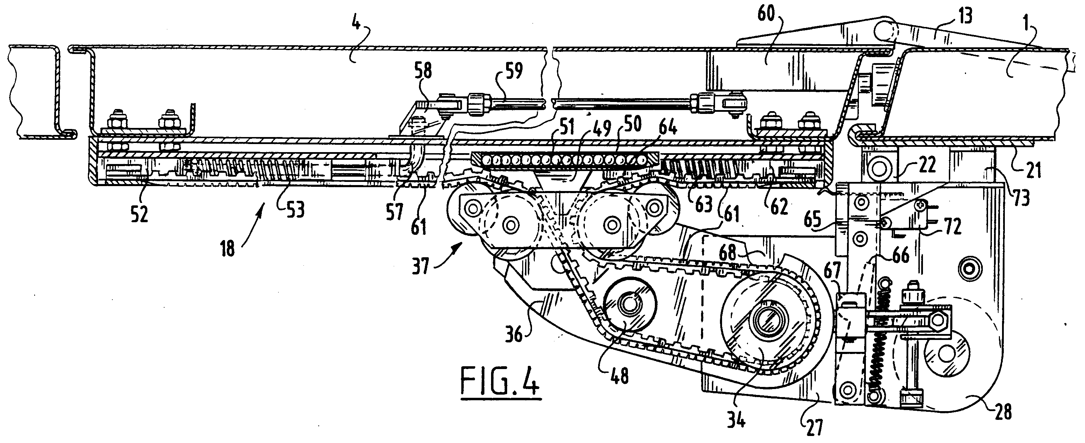

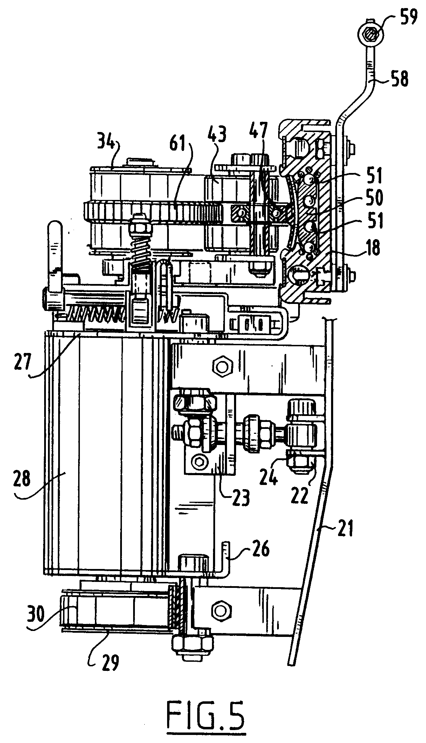

The present invention comprises a control mechanism accommodated in a housing 17 which is fixed to the inside of the vehicle wall 1. The control mechanism further comprises a profile 18 which is fixed against the inside of the door 4 but which can however also be recessed into the construction of door 4. To operate the locking mechanism 15 the lock is provided with a lever 19 which is connected via a control rod 20 to a mechanism fixed onto profile 18 which will be described below. The construction of the drive mechanism according to the invention for causing the door to move will now be elucidated with reference to figures 2, 3, 4 and 5.

Depicted in figure 2 is a mounting plate 21 which is fixedly attached against the inside of the vehicle wall 1. On the side facing the door opening is fixed an ear 22, to which, by means of a second ear 23, a differential housing 25 is fixed. Both ears 22, 23 are connected by means of a bolt 24.

Fixed to differential housing 25 are two mounting plates 26 and 27 respectively, between which is fixed an electric motor 28. The latter comprises an output shaft on which is fixed a belt pulley 29, while out of the bottom side of differential housing 25 protrudes a shaft around which a second belt pulley 31 is arranged. A belt 30 is trained round both belt pulleys 29, 31. In the differential housing 25 is arranged a differential in the form of a triple planetary gear assembly 32 which drives a first output shaft 33, on which is fixed a toothed belt pulley 34. The second output shaft of the differential takes the form of a sleeve 35 which is concentric to the first output shaft 33 and to which is fixed a lever 36.

A carriage 37 is further arranged rotatably on lever 36, which carriage 37 is formed by a bottom plate 38 and top plate 39 which are connected by two shafts 40, 41 onto which are fixed guide wheels 42 and 43 respectively, in addition to two auxiliary shafts 44, 45 on each of which are fixed pressing wheels 46 and 47 respectively. Further arranged on lever 36 is a wheel 48 which prevents the two parts of the belt touching each other. The carriage 37 comprises a bracket 49 on which is fixed a guide 50 which is arranged in the profile 18 and which is slidable in profile 18 in lengthwise direction by means of two ball-bearing circuits 51.

On one end of the profile 18 is arranged a sliding piece 52 which is likewise movable in lengthwise direction of profile 18. The sliding piece 52 is pressed by means of springs 53 to its extreme position against a closing plate 54 fastened on the end of profile 18. The other side of the springs rests against spring anchors 55, 56 fixed in the profile.

The sliding piece 52 is connected to a rod 57 which extends through the spring anchor 56 provided with an aperture and through the spring 53 arranged between this spring anchor 56 and the sliding piece. The end of rod 57 is bent and fixed to a plate 58 which is connected by means of a rod 59 to a locking mechanism 60. This locking mechanism 60 can correspond with the initially mentioned locking mechanism 15 but can also be a different locking mechanism.

On the other side of the profile a similar device can be arranged for opening a locking mechanism which locks the door in the opened state, although this is not necessary for the invention.

The device according to the invention further comprises a toothed belt 61 which extends from the sliding piece 52, then extends in the profile 18, is guided along pressing wheel 46, guide wheel 42, tensioning wheel 48, toothed belt pulley 34, guide wheel 43, pressing wheel 47, through the profile 18 as far as a sliding piece 62 fixed in profile 18. In order to reduce the dynamic forces exerted by belt 61 on the sliding door, springs 63 can likewise be applied which are fixed by means of spring anchors 64.

The rest of the device will be described with reference to the functional description of the device. The starting point is the closed position of the door. This is the situation shown in figures 1, 2, 3, 4 and 5. The user of the vehicle has at his disposal for example a remote control for the device according to the invention. The user gets out of the vehicle, walks to the area of the door and switches on the device by means of the remote control, whereby the electric motor 28 will begin to rotate. It should be noted here that while the remote control facilitates the use of the invention, it is by no means essential thereto.

The rotating electric motor 28 will drive the differential 32 accommodated in differential housing 25 via belt pulley 29, belt 30 and belt pulley 31. The rotation of the second output shaft 35, to which the lever 36 is fixed, is blocked because the door is locked and cannot be moved outward. Due to the differential action the first driven shaft 33 is thus driven, which drives the toothed belt 61 via the belt pulley 34.

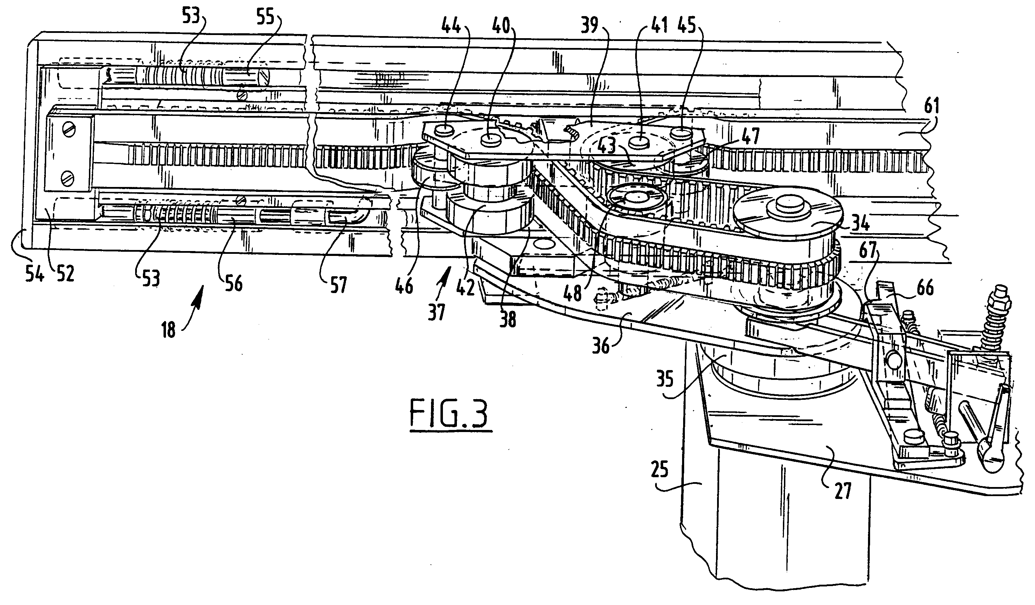

Although in the present embodiment of the invention there is a toothed belt, it is possible to make use of a belt which is not toothed, for example for light vehicles which include a light door, so that the forces for transmitting are smaller. As a result of the driving action a tractive force is applied to the right-hand part (figure 3) of the toothed belt 61. As a result of this tractive force the sliding body 52, to which the belt is fixed, is pulled to the right counter to the action of the springs 53.

The rod 57 is thus moved to the right. This rod moves the plate 58, whereby rod 59 is moved to the left and the locking mechanism 60 connected thereto is released.

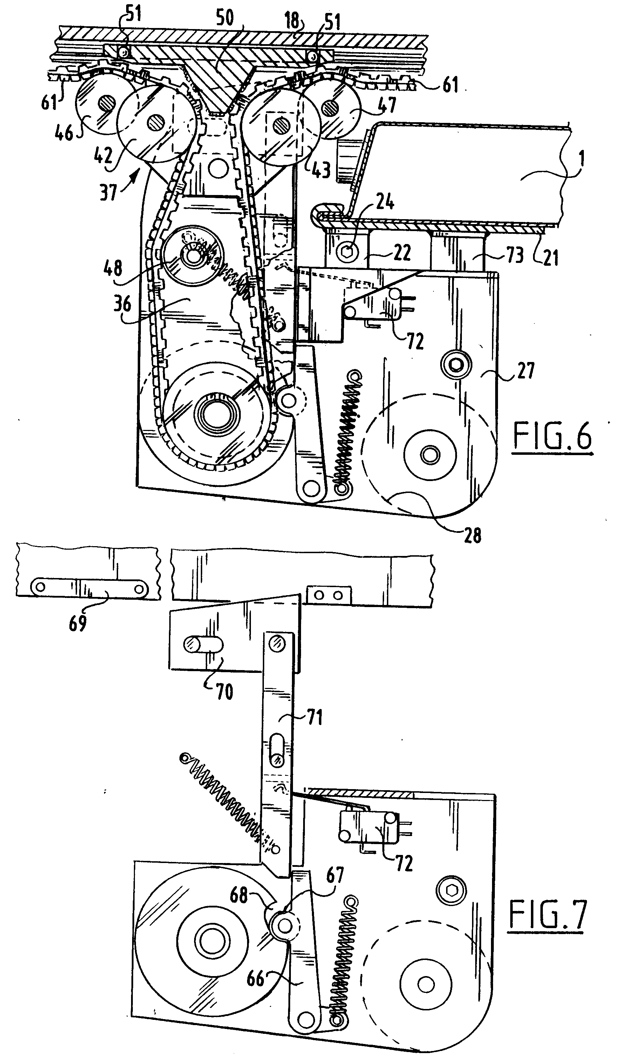

Although a tractive force is exerted continuously on the toothed belt 61 by the differential action, this will not as yet have any effect, because movement of the door 4, and thus of profile 18, is blocked in the sliding direction. Instead, the second output shaft 35 of the differential is driven, whereby the lever 36 will begin to swivel. The locking of the lock is in any case discontinued so that the swivel movement can be performed. The swivel movement is continued as far as the stop, wherein lever 36 rests against buffer 65. A roller 67 fixed to a lever 66 herein falls into a recess 68 which is arranged in lever 36. The lever 36 is thus locked in the position shown in figure 6.

As a result of this lever action of lever 36, the door 4 can move in lengthwise direction, wherein it is driven by the toothed belt 61. This sliding movement, wherein door 4 is opened, is continued until a stop 69 fixed to the aluminium profile actuates microswitch 72 via sliding piece 70 and lever 71. The rotation of the motor is hereby switched off and the door comes to a stop in the opened position.

With the closing movement of the door the motor 28 is switched on, once again by either a manual switch or a remote control, and now in a rotation direction opposed to the rotation direction during opening of the door. The differential 32 is here also driven by means of the described mechanism, wherein rotation of the second output shaft 35 of the differential is initially blocked because roller 67 is situated in recess 68. The driving force of the motor is thus used via the differential to drive the first output shaft 33 of the differential, whereby the toothed belt 34 is driven as well as the toothed belt 61 connected thereto. As a result of the tractive force in the right-hand part of toothed belt 61, the sliding door 4 will move in the direction towards the door opening. The inward directed movement of the door is herein blocked by the blocking of the lever 13. When the door has almost arrived in front of the door opening the blocking of the door 13 is discontinued, as with a typical, manually operated door of this type, whereby the door can move inward. At the same time the door strikes against a stop, whereby further movement of the door in the lengthwise direction is blocked.

The drive of the first output shaft of the differential is hereby stopped, while the drive of the second output shaft drives lever 36. The blocking of lever 36 is meanwhile discontinued because lever 71 is moved by the door, whereby lever 66 is moved and the roller 67 is moved out of recess 68. The door is then closed by the rotating movement of lever 36.

It is noted here that the construction of the unit, in which electric motor 28 and differential housing 25 are fixed, is fastened rotatably to the wall of the vehicle by means of the bolt 24, so that no additional forces or moments are transferred to the vehicle wall. A buffer 73 is arranged in order to enable transmission of the necessary forces.

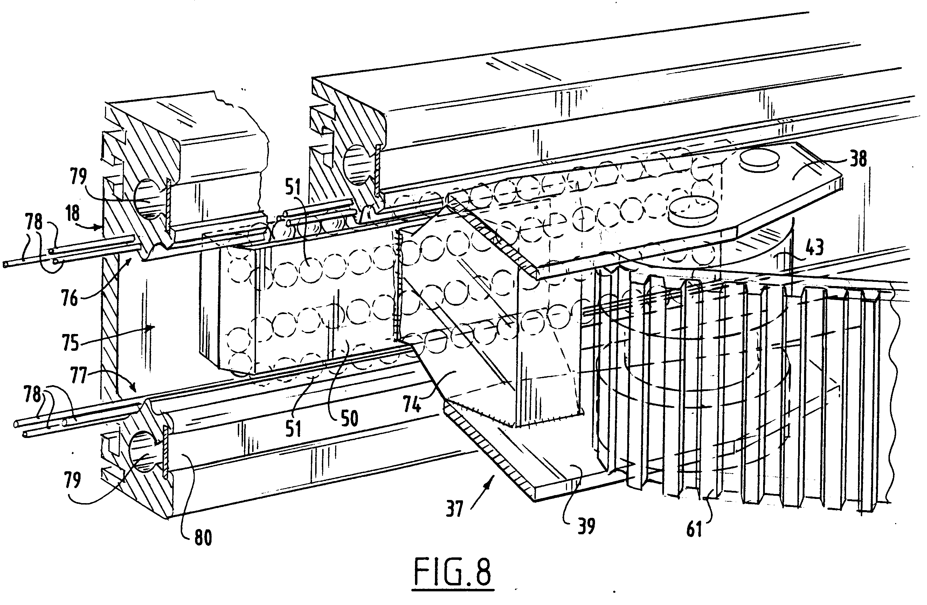

The construction of the carriage 37 will now be elucidated with reference to figure 8. As already stated, carriage 37 is formed by a top plate 38 and a bottom plate 39, which are otherwise connected by a connecting piece 74. The latter is connected to a guide 50 which, as already stated, is slidably connected in profile 18 means of two ball-bearing circuits 51. The construction of shafts 40, 41, 44, 45 and wheels 42, 43, 46, 47 has already been elucidated with reference to figure 3. The profile 18 is provided with a shallow, relatively broad groove 75 in which the guide 50 with the ball-bearing circuits are arranged. At the top and at the bottom the broad groove 75 is provided with running grooves 76 and 77 respectively for the ball-bearing circuits 51. Three travel rods 78 made of a more wear-resistant material than the profile are arranged in each of the two running grooves 76, 77. The profile will in any case usually be manufactured from aluminium which, with use of a ball-bearing circuit, would wear relatively quickly. The travel rods 78 are arranged in order to resolve this problem. Initially the ball-bearings will run on both outer travel rods but, when these have reached a certain degree of wear, the balls will also run on the middle wear rod.

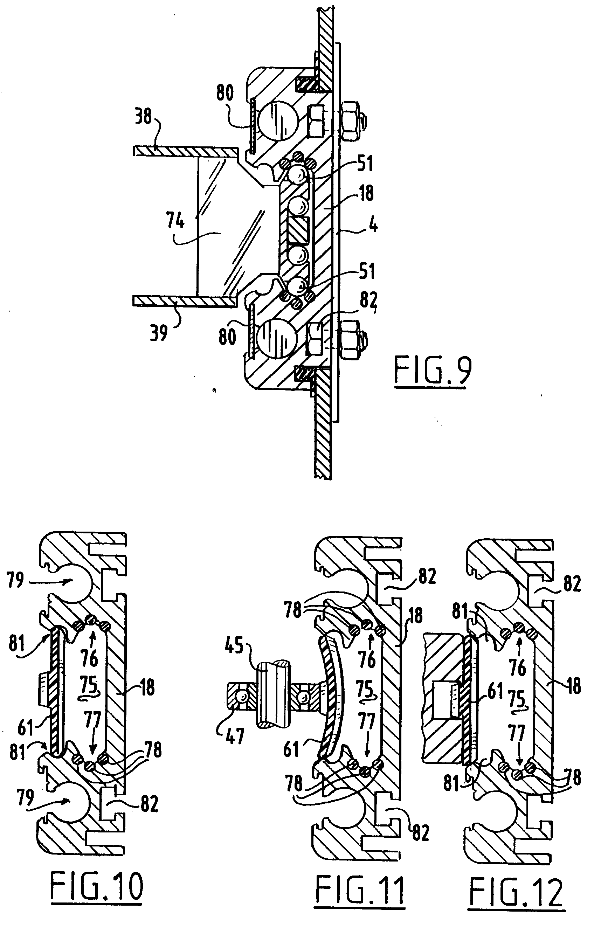

To receive the springs 53 and spring anchors 55 the profile is provided with grooves 79 which are covered with plates 80. Finally, the recessed groove 75 is provided with retaining grooves 81 in which the toothed belt can be pressed. This process is shown in figures 10, 11 and 12. The size of belt 61 is selected such that it fits precisely between the two grooves, but can easily be removed from the grooves under the tractive force. When being pushed back again into the grooves use is made of the pressing wheels 46, 47. Finally, the profile is provided with T-shaped grooves 82, into which screw heads can be placed for fixing the aluminium profile against or in the door.

It will be apparent that the shown construction can be modified without deviating from the present invention.

## Claims

1. Device for driving a door arranged in a vehicle, movable substantially parallel to a wall of the vehicle and adapted to close an opening arranged in a vehicle wall, which device comprises a flexible belt, two ends of which are connected to the door, and a drive device connected to the vehicle which is adapted to exert tractive forces on the belt by means of engaging means.

2. Device as claimed in claim 1, **characterized in that** at least one end of the belt is adapted to engage on an auxiliary body which is resiliently connected to the door and which is connected with a transmission mechanism to a lock fixed on the door.

3. Device as claimed in claim 1 or 2, wherein the door is provided with guide means for moving the door substantially transversely of the wall direction into and out of the closed position, **characterized by** guide means for guiding the flexible belt, which guide means are movable substantially transversely of the wall direction.

4. Device as claimed in claim 3, **characterized in that** the guide means for the movement in the transverse direction are drivable by the drive means.

5. Device as claimed in claim 4, **characterized in that** the drive means comprise a differential, the input shaft of which is driven by an electric motor, a first output shaft drives the transverse movement of the engaging means, and a second output shaft drives the rotating engaging means.

6. Device as claimed in claim 5, **characterized in that** the differential comprises a planetary gear assembly.

7. Device as claimed in any of the claims 3-6, **characterized in that** the guide means are formed by at least two rollers which are fixed to a carriage, which carriage is fixed on an arm which is drivable in rotation by the first output shaft of the differential.

8. Device as claimed in any of the foregoing claims, **characterized in that** to the inside of the door is fixed a profile to which the at least one auxiliary body is resiliently attached and which is adapted to guide the carriage.

9. Device as claimed in claim 8, **characterized in that** the profile is provided with edges for retaining the belt and that additional guide wheels are arranged on the carriage for pressing the belt under the edges.

10. Device as claimed in claim 8 or 9, **characterized** **in that** the carriage is slidably connected to the profile by means of a ball-bearing circuit.

11. Device as claimed in claim 10, **characterized in that** a path is arranged in the profile for the ball-bearing circuit which comprises at least two removable running surfaces.

12. Device as claimed in any of the foregoing claims, **characterized in that** the device can be operated by means of a remote control.
